# EUROPÄISCHE PATENTANMELDUNG

(11) **EP 1 452 372 A1**
(43) Veröffentlichungstag der Anmeldung: **01.09.2004**
(21) Anmeldenummer: 03024878.5
(22) Anmeldetag: 31.10.2003
(51) Int. Cl.: B60J 10/08, B60J 10/00

(54) **Dichtungseinrichtung**

(30) Priorität: 25.02.2003 DE 10307948
(71) Anmelder: VERITAS AG, 63571 Gelnhausen (DE)
(72) Erfinder: Klockenhoff, Ingo, Dipl.-Ing., 88131 Bodolz (DE); Hattass, Dirk, Dipl.-Ing., 63584 Gründau (DE); Werkmann, Matthias, Dipl.-Ing., 63517 Rodenbach (DE); Halmek, Thomas, Dipl.-Ing., 63584 Gründau (DE); Veuskens, Johannes, Dr. Dipl.-Chemiker, 63571 Geinhausen-Meerholz (DE); Becker, Daniel, Dipl.-Ing., 47638 Straelen OT Broeckhuysen (DE)
(74) Vertreter: Grünecker, Kinkeldey, Stockmair & Schwanhäusser Anwaltssozietät

(57) **Zusammenfassung**

Die vorliegende Erfindung betrifft eine Dichtungseinrichtung, die zwischen einer Verschlussklappe (9) zum Verschließen einer Fahrzeugöffnung und der Fahrzeugöffnung angeordnet ist, wobei die Dichtungseinrichtung (1) mindestens eine Hohlkammer (5) aufweist und ein Verfahren zum Einbauen einer erfindungsgemäßen Dichtungseinrichtung (1) vorzugsweise in ein Kraftfahrzeug.

## Beschreibung

Die vorliegende Erfindung betrifft eine Dichtungseinrichtung, die zwischen einer Verschlussklappe zum Verschließen einer Fahrzeugöffnung und der Fahrzeugöffnung angeordnet ist, wobei die Dichtungseinrichtung mindestens eine Hohlkammer aufweist.

Eine derartige Dichtungseinrichtung ist z. B. aus der DE 199 32 799 A1 bekannt. In dieser Druckschrift wird ein Verfahren zum Herstellen einer Dichtung vorgegebenen Höhe beschrieben. Zum Einstellen einer vorgegebenen Höhe einer Dichtung an einem Bauteil, die einen Flansch und ein von diesem getragenes elastisches Dichtprofil enthält, wird der Flansch als separates Teil hergestellt und unter Verwendung einer Lehre in einer Position an dem Bauteil befestigt, die die vorgegebene Höhe der Dichtung sicherstellt. Der Dichtungsflansch wird durch Schweißung (Punktschweißung) oder Lasern an einem abgebogenen Befestigungsflansch des Dichtkanals befestigt.

Als nachteilig bei den bisherigen Dichtungseinrichtungen und Verfahren hat es sich jedoch erwiesen, dass es keine Möglichkeit gibt, eine Dichtung auf tatsächliche im verbauten Zustand vorhandene Spaltmaße eines Fahrzeuges abzustimmen. Darüber hinaus besteht bei den bisherigen Dichtungseinrichtungen das Problem, dass es beim Verschließen einer Fahrzeugöffnung zum ungewollten Durchschlagen der Verschlussklappe kommen kann. Dabei kann es sich z. B. um den Heckdeckel zum Verschließen des Kofferraums, die Tür oder eine sonstige Klappe eines Fahrzeuges handeln.

Die Aufgabe der vorliegenden Erfindung besteht darin, eine Dichtungseinrichtung der eingangs genannten Art zu verbessern und insbesondere eine Abstimmung der Dichtungseinrichtung auf tatsächlich vorhandene fahrzeugspezifische Spaltmaße im verbauten Zustand zu gewährleisten und die Gefahr des Durchschlagens einer Verschlussklappe beim Verschließen einer Fahrzeugöffnung zu verringern.

Die Aufgabe wird erfindungsgemäß gelöst durch eine Dichtungseinrichtung der eingangs genannten Art, bei der die Hohlkammer zumindest abschnittsweise mit einem zunächst viskosen und nach dem Einbringen in die Hohlkammer sich nachgiebig verfestigenden Material gefüllt ist.

Diese Lösung hat den Vorteil, dass die Dichtungseinrichtung im verbauten Zustand auf tatsächlich vorhandene fahrzeugspezifische Spaltmaße abgestimmt werden kann. Außerdem kann die Gefahr des Durchschlagens der Verschlussklappe beim Verschließen einer Fahrzeugöffnung verringert werden, bzw. die mögliche Schließgeschwindigkeit bei gleichbleibendem Schließkontakt erhöht werden. Dies trifft auch auf Autos zu, bei denen z. B. der Kofferraumdeckel auf Knopfdruck automatisch verschlossen wird.

In einer bevorzugten Ausführungsform kann das Material zunächst flüssig sein, wodurch ein leichteres Einbringen des Materials in die Hohlkammer möglich ist.

Günstig kann es ebenfalls sein, wenn das Material ein thermoplastisches Elastomer ist, da dadurch eine leichtere Verarbeitung des Materials möglich ist.

Wenn das Material ein schäumendes Material ist, ist eine noch leichtere Verarbeitung des Materials möglich.

Weiterhin kann es von Vorteil sein, wenn das schäumende Material ein PU-Schaummaterial ist. Dadurch ist eine noch leichtere Verarbeitung des Materials möglich.

Zudem kann es sich als vorteilhaft erweisen, wenn das schäumende Material ein Zweikomponenten-PU Schaummaterial ist. Auf diese Weise kann das Material noch leichter verarbeitet werden.

Von Vorteil kann es sein, wenn das Material in die Hohlkammer einspritzbar ist, da auf diese Weise das Einbringen des Materials in die Hohlkammer weiter vereinfacht werden kann.

In einer vorteilhaften Weiterentwicklung der Erfindung kann die Hohlkammer über ihren Querschnitt teilweise mit dem Material gefüllt sein, wodurch bessere Dichtungseigenschaften erreicht werden, da die Dichtung besser an die Form der Verschlussklappe anpassbar ist. Darüber hinaus kann die Dichtung nach Entlastung wieder in die ursprüngliche Form zurückkehren, wodurch der optische Eindruck verbessert werden kann.

Vorteilhaft kann es zudem sein, wenn mindestens ein Eckabschnitt der Dichtungseinrichtung zumindest teilweise mit dem Material gefüllt ist. Somit kann der Schutz vor Durchschlagen an den besonders gefährdeten Eckabschnitten der Dichtungseinrichtung verbessert werden. Außerdem ist das Material besser vor Verrutschen gesichert, wenn es sich in einem Eckabschnitt befindet.

Außerdem kann es sich als vorteilhaft erweisen, wenn die Dichtungseinrichtung aus einem elastischen Material besteht. Auf diese Weise können die Dichtungseigenschaften verbessert werden.

Wenn das elastische Material ein Elastomer ist, können die Dichtungseigenschaften weiter verbessert werden.

Wenn die Dichtungseinrichtung aus einem Moosgummi besteht, ist eine weitere Verbesserung der Dichtungseigenschaften möglich.

Günstig kann es sein, wenn das Material mit der Dichtungseinrichtung nicht verbunden ist. Auf diese Weise kann die Hohlkammer nach Entlastung der Dichtungseinrichtung noch leichter in die ursprüngliche Lage zurückkehren, wodurch der optische Eindruck weiter verbessert wird. Darüber hinaus ist die Elastizität der Dichtungseinrichtung auf diese Weise größer.

Ebenfalls kann es von Vorteil sein, wenn die Dichtungseinrichtung im eingebauten Zustand und bei geschlossener Verschlussklappe sich in Anlage mit der Verschlussklappe befindet und zwischen einem Karosserieteil und der Verschlussklappe angeordnet ist, da dadurch die Dichtungseigenschaften noch weiter verbessert werden können.

Weiterhin kann es von Vorteil sein, wenn die Dichtungseinrichtung im eingebauten Zustand an dem Karosserieteil befestigt ist, da dadurch der Halt der Dichtungseinrichtung verbessert werden kann.

Es kann sich auch als günstig erweisen, wenn die Dichtungseinrichtung entlang einer geschlossenen Linie verläuft. Somit ist es möglich, die Abdichtung z. B. der Heckklappe eines Fahrzeuges weiter zu verbessern.

Außerdem kann es von Vorteil sein, wenn die Verschlussklappe die Heckklappe, der Kofferraumdeckel oder die Tür eines Kraftfahrzeuges ist. Auf diese Weise kann die Abdichtung und die Schließgeschwindigkeit dieser oft betätigten Teile verbessert werden.

Weiterhin wird ein Verfahren beansprucht zum Einbauen einer erfindungsgemäßen Dichtungseinrichtung, vorzugsweise in ein Kraftfahrzeug, bei dem zunächst viskoses Material zumindest abschnittsweise in die Hohlkammer der Dichtungseinrichtung eingebracht wird und sich anschließend nachgiebig verfestigt. Auf diese Weise kann die Dichtungseinrichtung im verbauten Zustand auf tatsächlich vorhandene fahrzeugspezifische Spaltmaße abgestimmt werden. Außerdem kann die Gefahr des Durchschlagens beim Verschließen einer Fahrzeugöffnung mit einer Verschlussklappe verringert, bzw. die Schließgeschwindigkeit erhöht werden.

Auch kann es sich als vorteilhaft erweisen, wenn die Dichtungseinrichtung am Fahrzeug montiert wird und anschließend das Material eingebracht wird. Auf diese Weise ist eine leichtere Verarbeitung des Materials und eine bessere Anpassung der Dichtungseinrichtung an tatsächlich vorhandene fahrzeugspezifische Spaltmaße im verbauten Zustand möglich.

Vorteilhaft kann es zudem sein, wenn das Material zumindest abschnittsweise in die Hohlkammer der Dichtungseinrichtung eingespritzt wird, wodurch die Verarbeitung weiter vereinfacht wird.

Ebenfalls kann es von Vorteil sein, wenn die Verschlussklappe zur Formgebung des Material nach dem Einbringen des Material in die Dichtungseinrichtung geschlossen wird. Auf diese Weise ist eine bessere Anpassung des Materials an die Form der Verschlussklappe möglich.

Die Erfindung wird nachstehend anhand von einem Ausführungsbeispiel und zugehöriger Zeichnungen näher erläutert.

In diesen Zeichnungen zeigt:
- Fig. 1: Ein Ausführungsbeispiel einer erfindungsgemäßen Dichtungseinrichtung,
- Fig. 2: eine Schnittansicht der Dichtungseinrichtung aus Figur 1 entlang einer Linie A-A,
- Fig. 3: eine Schnittansicht der Dichtungseinrichtung bei geschlossener Verschlussklappe und
- Fig. 4: eine graphische Darstellung der Profilkraft F in Abhängigkeit vom Weg S bei einer vollständig, bzw. teilweise gefüllten Hohlkammer und einer ungefüllten Hohlkammer.

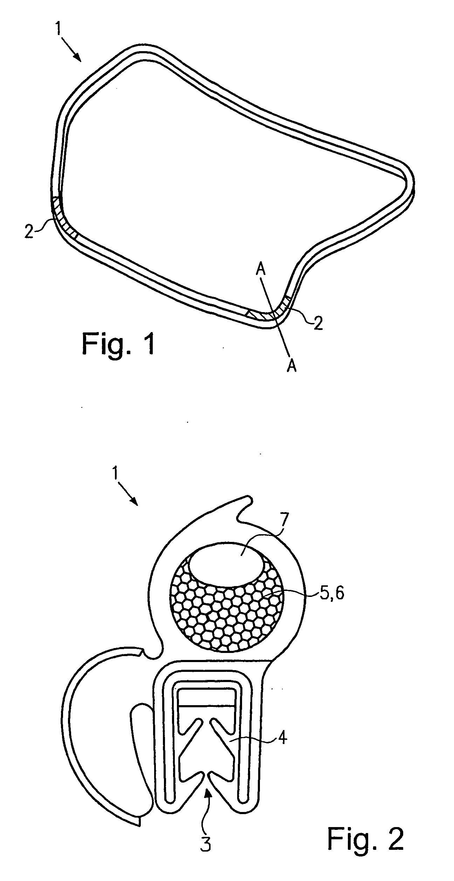

Figur 1 zeigt eine erfindungsgemäße Dichtungseinrichtung 1, die eine Hohlkammer 5 aufweist. Die Hohlkammer 5 ist in Figur 2 dargestellt. Weiterhin sind Eckabschnitte 2 dargestellt, bei denen die Hohlkammer 5 zumindest abschnittsweise mit einem zunächst viskosen und nach dem Einbringen in die Hohlkammer 5 sich nachgiebig verfestigenden Material 6 gefüllt ist. Das Material 6 ist ebenfalls in Figur 2 dargestellt. Wenn sich das Material 6 in den Eckabschnitten 2 befindet, hat es einen besonders starken Halt in der Hohlkammer. Das Material 6 kann sich auch in den geraden Abschnitten der Dichtungseinrichtung 1 befinden.

Darüber hinaus ist in Figur 1 gut zu erkennen, dass die Dichtungseinrichtung entlang einer geschlossenen Linie, hier im Wesentlichen rechteckig, verläuft, um eine bessere Abdichtung z. B. einer nicht dargestellten Tür oder Heckklappe zu ermöglichen.

Die Dichtungseinrichtung 1 besteht aus einem elastischen Material, vorzugsweise aus einem Moosgummi. Denkbar sind auch andere Elastomere oder ähnliche thermoplastische Elastomere.

In Figur 2 ist eine Schnittansicht der Dichtungseinrichtung aus Figur 1 entlang einer Linie A-A dargestellt. Gut zu erkennen ist ein Halteabschnitt 3 mit Halteeinrichtungen 4. Darüber hinaus ist das Material 6 gut zu erkennen, das sich in der Hohlkammer 5 befindet. Das Material 6 muss zunächst viskos bzw. flüssig sein und sich nach dem Einbringen in die Hohlkammer 5 nachgiebig verfestigen. Dabei hat sich ein Zweikomponenten-PU Schaummaterial 6 als besonders günstig erwiesen. Alternativ können auch thermoplastische Elastomere PU-Schaummaterialien oder schäumende Materialien verwendet werden. Denkbar sind allerdings auch nichtschäumende Materialien, die nach dem Einbringen in die Hohlkammer 5 erhärten.

Zur leichteren Verarbeitung sollte das Material 6 mit einer nicht dargestellten Spritze in die Hohlkammer 5 einspritzbar sein. Alternativ kann sich das Material 6 auch schon im Anlieferzustand in der Hohlkammer 5 befinden.

Weiterhin ist in Figur 2 gut zu erkennen, dass die Hohlkammer 5 über ihren Querschnitt teilweise mit dem Material 6 gefüllt ist und sich somit ein nicht gefüllter Raum 7 in der Hohlkammer 5 befindet.

Das verwendete Zweikomponenten-PU Schaummaterial 6 hat die Eigenschaft, dass es sich nicht mit der Dichtungseinrichtung 1 verbindet. Somit geht nach der Entlastung der Dichtungseinrichtung 1 die Hohlkammer 5 wieder in die ursprüngliche Lage zurück, wodurch die Optik verbessert werden kann. Darüber hinaus ist die Elastizität der Dichtungseinrichtung 1 auf diese Weise größer. Denkbar ist auch die Verwendung von thermoplastischen Elastomeren, Einkomponenten oder Mehrkomponenten PU Schaummaterial.

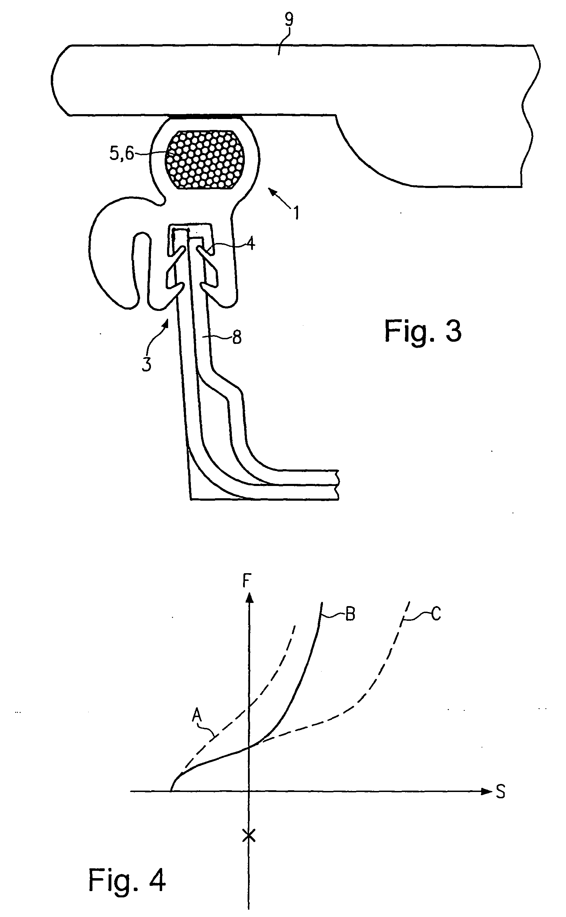

In Figur 3 ist die Dichtungseinrichtung 1 im eingebauten Zustand dargestellt. Gut zu erkennen ist, dass sich die Dichtungseinrichtung 1 im eingebauten Zustand und bei einer geschlossenen Verschlussklappe 9 in Anlage mit der Verschlussklappe 9 befindet und zwischen einem Karosserieteil 8 und der Verschlussklappe 9 angeordnet ist. Außerdem ist gut zu erkennen, dass die Dichtungseinrichtung 1 bei geschlossener Verschlussklappe 9 abgeflacht ist. Bei der Verschlussklappe 9 kann es sich z. B. um die Heckklappe oder den Kofferraumdeckel eines nicht dargestellten Kraftfahrzeuges handeln. Denkbar sind auch Verschlussklappen oder sonstige Klappen, wie z. B. die Türen eines Fahrzeuges.

Die Dichtungseinrichtung 1 ist im eingebauten Zustand am Karosserieteil 8 befestigt. Dabei befindet sich das Karosserieteil 8 im Halteabschnitt 3 der Dichtungseinrichtung 1. Die Dichtungseinrichtung 1 wird mittels der Halteeinrichtungen 4 am Karosserieteil 8 befestigt.

In Figur 4 ist eine Profilkraft F in Abhängigkeit von einem Weg S graphisch dargestellt. Außerdem ist eine Position X dargestellt, die die Profilkraft F bei geschlossener Verschlussklappe 9 markiert. In der Position X ist die Profilkraft F negativ, d. h., die durch die Verschlussklappe 9 niedergedrückte Dichtungseinrichtung 1, wirkt der Kraft der Verschlussklappe 9 entgegen.

In der Graphik entspricht der negative Weg S der offenen Verschlussklappe 9 und der positive Weg S der geschlossenen Verschlussklappe 9.

Bei der vollständig gefüllten Hohlkammer 5 (Kurve A) ist ein steiler Anstieg der Profilkraft F mit dem Weg S zu erkennen, d. h., das Zusammendrücken der Hohlkammer 5 durch die Verschlussklappe 9 erfordert relativ viel Kraft.

Bei der Hohlkammer 5 ohne Füllung (Kurve C) erfolgt der Anstieg der Profilkraft F zunächst nicht so steil. Die Profilkraft F nimmt erst zu, wenn die Verschlussklappe 9 auf das Material 6 drückt, d.h., kurz bevor die Verschlussklappe 9 ganz geschlossen ist.

Bei der teilweise gefüllten Hohlkammer 5 (Kurve B) erfolgt der Kraftanstieg zunächst relativ flach. Ab dem Zeitpunkt, bei dem die Verschlussklappe 9 auf das Material 6 trifft, erfolgt ein steiler Anstieg der Kraftkurve. Somit wird die minimale Schließgeschwindigkeit nicht erhöht, jedoch die Gefahr des Durchschlagens verringert. Zuerst erfolgt ein weiches Zuschlagen der Verschlussklappe 9 im Bereich der nichtgefüllten Hohlkammer 5, dann ein stärkerer Widerstand, d. h., eine große Profilkraft im Bereich der gefüllten Hohlkammer 5.

Nachfolgend wird die Wirkungs- und Funktionsweise der Erfindung näher erläutert.

Zunächst wird die Dichtungseinrichtung 1 in üblicher Weise z. B. durch Hammermontage oder Rollforming am Fahrzeug montiert. Dabei kann es sich z. B. um eine Dichtungseinrichtung handeln, die zwischen dem Kofferraumdeckel 9 und einem nicht dargestellten Kofferraum angeordnet ist. Denkbar ist auch die Verwendung der Dichtungseinrichtung 1 für andere Verschlussklappen wie z. B. Türen oder Ablagefächer in einem Fahrzeug.

Danach wird zunächst viskoses Material 6 zumindest abschnittsweise in die Hohlkammer 5 der Dichtungseinrichtung eingebracht, das sich nach einer gewissen Zeit nach dem Schließen der Verschlussklappe 9 nachgiebig verfestigt. Dadurch erfolgt eine fahrzeugspezifische Toleranzabbildung. Dabei hat sich ein Zweikomponenten-PU Schaummaterial 6 als besonders günstig erwiesen. Denkbar sind auch andere Materialien, die zunächst viskos bzw. flüssig sind und sich später nachgiebig verfestigen.

Das schäumende Material 6 kann z. B. durch eine schräg angespitzte Nadel in die Hohlkammer 5 injiziert werden. Alternativ kann es sich auch um einen Weichgummiguss handeln. Es können mehrere Injektionspunkte gewählt werden, um eine definierte Menge an schäumenden Material 6 in die Hohlkammer einzuspritzen. Dabei wird die Hohlkammer 5 nur abschnittsweise mit dem schäumenden Material 6 gefüllt. Als besonders kritisch bezüglich der Abdichtung und des Durchschlagens der Verschlussklappe 9 haben sich die Eckabschnitte 2 erwiesen. Somit ist es günstig die Eckabschnitte 2 mit dem schäumenden Material 6 zu füllen. Es können auch andere Bereiche der Hohlkammer 5 mit dem schäumenden Material 6 gefüllt werden. Dabei kann es sich z. B. um den Bereich der Verschlussklappe handeln, an dem das Schloss angebracht ist, da an dieser Stelle ebenfalls die Gefahr des Durchschlagens besteht.

Wenn die Hohlkammer 5 über ihren Querschnitt nicht vollständig mit dem schäumenden Material 6 gefüllt ist, kann ein leichtes Schließen der Verschlussklappe, eine gute Abstimmung der Dichtungseinrichtung auf tatsächlich vorhandene fahrzeugspezifische Spaltmaße und die Gefahr des Durchschlagens beim Verschließen der Verschlussklappe verringert werden. Alternativ kann die Hohlkammer 5 auch vollständig mit Material 6 gefüllt werden.

Anschließend muss die Verschlussklappe 9 zur Formgebung des Materials 6 nach dem Einbringen des Materials 6 in die Dichtungseinrichtung geschlossen werden. Nach einer Trocknungszeit, die vom verwendeten Material 6 und Umgebungseinflüssen wie z. B. der Temperatur abhängt, ist das Material 6 verfestigt und behält auch nach dem Öffnen der Verschlussklappe 9 seine Form bei. Dadurch, dass sich das Material 6 nicht mit der Dichtungseinrichtung 1 verbindet, kann die Hohlkammer 5 immer wieder in die ursprüngliche Form zurückkehren, wodurch ein guter optischer Eindruck erhalten bleibt.

Mit der erfindungsgemäßen Dichtungseinrichtung und dem erfindungsgemäßen Verfahren ist es möglich, die Abstimmung der Dichtungseinrichtung 1 auf tatsächlich vorhandene fahrzeugspezifische Spaltmaße im verbauten Zustand vorzunehmen. Darüber hinaus kann die Gefahr eines Durchschlagens der Verschlussklappe 9 verringert, bzw. die Schließgeschwindigkeit der Verschlussklappe 9 erhöht werden bei gleichzeitig minimal notwendiger Schließgeschwindigkeit, durch das Einspritzen des schäumenden Materials 6 und dem anschließenden Verformen auf Spaltmaß durch Schließen des Heckdeckels vor, bei oder nach dem Schäumprozess. Dabei geht das schäumende Material 6 keinen Verbund mit der Dichtungseinrichtung 1, die üblicherweise aus Moosgummi besteht, ein. Auf diese Weise geht die Hohlkammer 5 nach Entlastung wieder in die ursprüngliche Lage zurück, so dass ein guter optischer Eindruck entsteht.

Weiterhin hat die erfindungsgemäße Dichtungseinrichtung 1 keinen Einfluss auf den Schließkomfort, d. h. es muss nicht mehr Kraft zum Schließen der Verschlussklappe 9 aufgewendet werden.

## Patentansprüche

1. Dichtungseinrichtung, die zwischen einer Verschlussklappe (9) zum Verschließen einer Fahrzeugöffnung und der Fahrzeugöffnung angeordnet ist, wobei die Dichtungseinrichtung (1) mindestens eine Hohlkammer (5) aufweist, **dadurch gekennzeichnet, dass** die Hohlkammer (5) zumindest abschnittsweise mit einem zunächst viskosen und nach dem Einbringen in die Hohlkammer (5) sich nachgiebig verfestigenden Material (6) gefüllt ist.

2. Dichtungseinrichtung nach Anspruch 1, **dadurch gekennzeichnet, dass** das Material (6) zunächst flüssig ist.

3. Dichtungseinrichtung nach zumindest einem der vorhergehenden Ansprüche, **dadurch gekennzeichnet, dass** das Material (6) ein thermoplastisches Elastomer ist.

4. Dichtungseinrichtung nach zumindest einem der vorhergehenden Ansprüche, **dadurch gekennzeichnet, dass** das Material (6) ein schäumendes Material ist.

5. Dichtungseinrichtung nach zumindest einem der vorhergehenden Ansprüche, **dadurch gekennzeichnet, dass** das schäumende Material (6) ein PU Schaummaterial ist.

6. Dichtungseinrichtung nach zumindest einem der vorhergehenden Ansprüche, **dadurch gekennzeichnet, dass** das schäumende Material (6) ein Zweikomponenten-PU Schaummaterial ist.

7. Dichtungseinrichtung nach zumindest einem der vorhergehenden Ansprüche, **dadurch gekennzeichnet, dass** das Material (6) in die Hohlkammer (5) einspritzbar ist.

8. Dichtungseinrichtung nach zumindest einem der vorhergehenden Ansprüche, **dadurch gekennzeichnet, dass** die Hohlkammer (5) über ihren Querschnitt teilweise mit dem Material (6) gefüllt ist.

9. Dichtungseinrichtung nach zumindest einem der vorhergehenden Ansprüche, **dadurch gekennzeichnet, dass** mindestens ein Eckabschnitt (2) der Dichtungseinrichtung (1) zumindest teilweise mit dem Material (6) gefüllt ist.

10. Dichtungseinrichtung nach zumindest einem der vorhergehenden Ansprüche, **dadurch gekennzeichnet, dass** die Dichtungseinrichtung (1) aus einem elastischen Material besteht.

11. Dichtungseinrichtung nach zumindest einem der vorhergehenden Ansprüche, **dadurch gekennzeichnet, dass** das elastische Material ein Elastomer ist.

12. Dichtungseinrichtung nach zumindest einem der vorhergehenden Ansprüche, **dadurch gekennzeichnet, dass die** Dichtungseinrichtung (1) aus einem Moosgummi besteht.

13. Dichtungseinrichtung nach zumindest einem der vorhergehenden Ansprüche, **dadurch gekennzeichnet, dass** das Material (6) mit der Dichtungseinrichtung (1) nicht verbunden ist.

14. Dichtungseinrichtung nach zumindest einem der vorhergehenden Ansprüche, **dadurch gekennzeichnet, dass** die Dichtungseinrichtung (1) im eingebauten Zustand und bei geschlossener Verschlussklappe (9) sich in Anlage mit der Verschlussklappe (9) befindet und zwischen einem Karosserieteil (8) und der Verschlussklappe (9) angeordnet ist.

15. Dichtungseinrichtung nach zumindest einem der vorhergehenden Ansprüche, **dadurch gekennzeichnet, dass** die Dichtungseinrichtung (1) im eingebauten Zustand an dem Karosserieteil (8) befestigt ist.

16. Dichtungseinrichtung nach zumindest einem der vorhergehenden Ansprüche, **dadurch gekennzeichnet, dass** die Dichtungseinrichtung (1) entlang einer geschlossenen Linie verläuft.

17. Dichtungseinrichtung nach zumindest einem der vorhergehenden Ansprüche, **dadurch gekennzeichnet, dass** die Verschlussklappe (9) die Heckklappe, der Kofferraumdeckel oder die Tür eines Kraftfahrzeuges ist.

18. Verfahren zum Einbauen einer Dichtungseinrichtung nach den Ansprüchen 1 bis 17 vorzugsweise in ein Kraftfahrzeug, **dadurch gekennzeichnet, dass** zunächst viskoses Material zumindest abschnittsweise in die Hohlkammer (5) der Dichtungseinrichtung (1) eingebracht wird und sich anschließend nachgiebig verfestigt.

19. Verfahren nach Anspruch 18, **dadurch gekennzeichnet, dass** die Dichtungseinrichtung (1) am Fahrzeug montiert wird und anschließend das Material (6) eingebracht wird.

20. Verfahren nach Anspruch 18 oder 19, **dadurch gekennzeichnet, dass** das Material (6) zumindest abschnittsweise in die Hohlkammer (5) der Dichtungseinrichtung (1) eingespritzt wird.

21. Verfahren nach zumindest einem der Ansprüche 18 bis 20, **dadurch gekennzeichnet, dass** die Verschlussklappe (9) zur Formgebung des Materials (6) nach dem Einbringen des Materials (6) in die Dichtungseinrichtung (1) geschlossen wird.
